# EUROPEAN PATENT APPLICATION

(11) **EP 2 124 303 A1**
(43) Date of publication of application: **25.11.2009**
(21) Application number: 08156571.5
(22) Date of filing: 20.05.2008
(51) Int. Cl.: H02B 1/21

(54) **Adapter, adapter in combination with an MCCB for a low voltage switchboard, use of such adapter and an electric switchboard comprising such adapter**

(71) Applicant: ABB Technology AG, 8050 Zürich (CH)
(72) Inventor: Thrue, Carsten, 8740, Brædstrup (DK)
(74) Representative: Nielsen, Leif

(57) **Abstract**

There is disclosed an adapter in combination with an MCCB having terminals for incoming and outgoing terminals and to be placed on a low voltage switchboard. The switchboard comprises a set of busbars and is used in distributing electrical energy to consumers. The adapter comprises an adapter base to which connectors are mounted. The connectors are connected to the busbars and to said incoming or outgoing terminals of the MCCB.

The product improves the installation phase of the MCCB and also allows casing of the production of the mechanical fastening device.

The adapter base has an opening, and aligned first ends of said connectors extend through said opening and are arranged at a front side of the adapter base in order to form the incoming or outgoing terminals to be placed in the terminals of the MCCB.

Moreover the second end of said connectors are provided with a clamp being arranged in predefined different positions at the rear side of the adapter base corresponding to the positions of the busbars and having a clamping part for gripping over a busbar to establish electrical connection and mechanical stability. Each clamp has a tightening means aligned with a hole in said adapter base to be operated from the front side of the adapter base through said hole.

## Description

### FIELD OF THE INVENTION

The present invention relates to an adapter for coupling with an MCCB which has incoming and outgoing terminals and is suitable to be placed on a low voltage switchboard comprising a set of busbars, said adapter comprises an adapter base to which connectors are mounted which connectors are suitable to be connected to said busbars and to said incoming or outgoing terminals of the MCCB.

Moreover the invention relates to an adapter in combination with an MCCB having incoming and outgoing terminals and which adapter is to be placed on a low voltage switchboard, said switchboard comprises a set of busbars and is used for distributing electrical energy to consumers, said adapter comprises an adapter base to which connectors are mounted which connectors are connected to said busbars and to said incoming or outgoing terminals of the MCCB.

Moreover the invention relates to the use of such adapter in such combination.

Moreover the invention relates to an electric switchboard comprising a set of busbars, a moulded case circuit breaker comprising such adapter.

MCCB's are most commonly used as feeders, securing the supply lines to the customers from the low voltage switchboard, but they may also be used as an incoming breaker.

The adapter is especially intended for mounting a standard Moulded Case Circuit Breaker (MCCB) on a DIN-based low voltage switchboard.

The invention furthermore relates to the adapter itself which is advantageous due to its mounting method and simple construction.

### BACKGROUND OF THE INVENTION

When distributing electrical energy to consumers, low voltages switchboards are used. Depending on the requirements either fuselists or MCCB's can be used as protection units for outgoing lines from the low voltage switchboards. Traditionally, it is geographically determined whether to use fuselists or MCCB's. Fuselists have been commonly used in Northern Europe, Germany in particular. This has lead to a DIN-standard on low voltage switchboards, defining the geometry of and distance between the three busbars used for each of the three electrical phases.

The DIN-standard dictates a distance of 185 mm between each phase busbar. The busbar itself is a flat copper profile. For every 100 mm it is made possible to mount an outgoing protection unit; in some cases this measure is only 50 mm.

Fuselists of vertical tier type are commercially available for DIN-based low voltage switchboards, where outgoing connecting terminals are positioned in the bottom of the fuselist, and the incoming terminals on its back side. The incoming terminals are placed with a vertical distance of 185 mm complying with the distance of the busbars on the DIN-based low voltage switchboard. Mechanical mounting of a fuselist on a DIN-based low voltage switchboard is done when bolting the three electrical terminals to the busbar by a standardized bolt. The weight of a fuselist is in the order of 10 kilograms, so the three bolts are considered as a sufficient mechanical connection.

Mounting a fuselist on a DIN-based low voltage switchboard is most often effected as a multiple step task, since the incoming terminals are often positioned underneath the fuses. So the base of the fuselist is mounted followed by insertion of fuses and finally by putting the electrical protection covers in position. Two basic sizes of fuselists are considered for DIN-based low voltage switchboards: DIN1/2/3 and DIN 00. The main difference is the width of the fuselist: DIN 1/2/3 is 100 mm wide whereas the DIN 00 has a width of 50 mm. The three bolts for incoming terminals are also different; where the DIN 1/2/3 is standardized as M12, the DIN 00 is M8.

Moulded Case Circuit Breakers do not comply with the DIN-standard for low voltage switchboards. Commercially available MCCB's are usually vertically connected, having incoming terminals in their top and outgoing terminals in their bottom, and are produced in series with a narrow range of electrical ratings. This means that several model housing sizes are available.

When using MCCB's in low voltage switchboards for supply, quite often a special designed switchboard is used. This usually comprises a set of busbars, from which connectors of bended copper profiles or cables connect each MCCB. The busbars could in principle be similar to the three busbars described in a DIN-based low voltage switchboard, but most often they differ considerably from the DIN layout. The MCCB's are often mounted on a mounting plate or similarly in the switchboard front, ensuring easy access and mechanical stability.

To mount an MCCB on a DIN-based low voltage switchboard requires extensive engineering in terms of electrical connectors between MCCB terminals and switchboard busbars and insulated mounting means. Mounting kits are seen, most commonly based on bend copper profiles, MCCB mechanical fastening devices and provisional protection coverings. These kits are most often characterized by their intricate assembly process and high production costs.

It is however seen increasingly frequent that both fuselists and MCCB's are placed on the same low voltage switchboard.

The low voltage switchboards comprising either fuselists or MCCB's are often used in so-called Compact Secondary Substations (CSS). However, they may also be used in industrial installations, cable distribution cabinets, ships or the like.

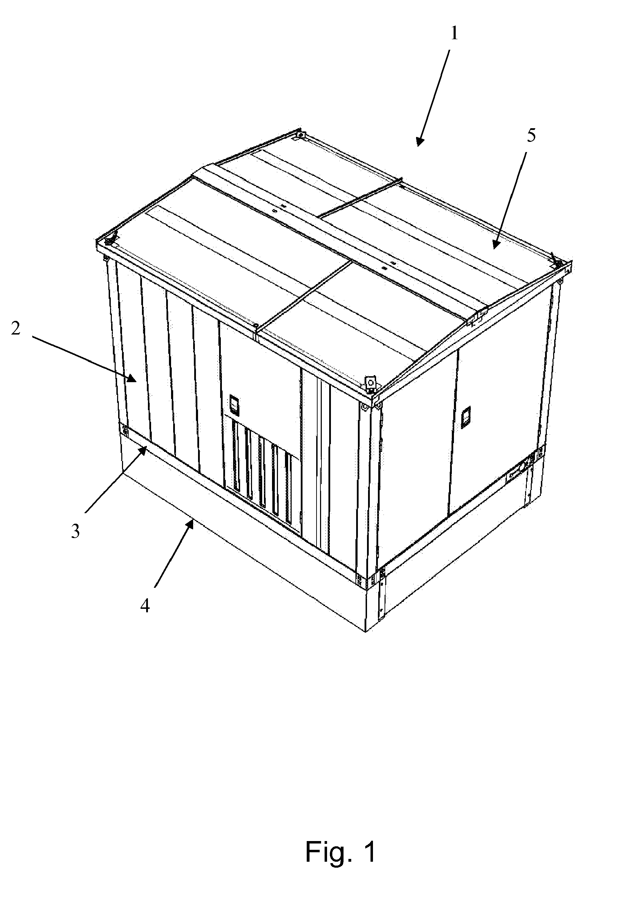

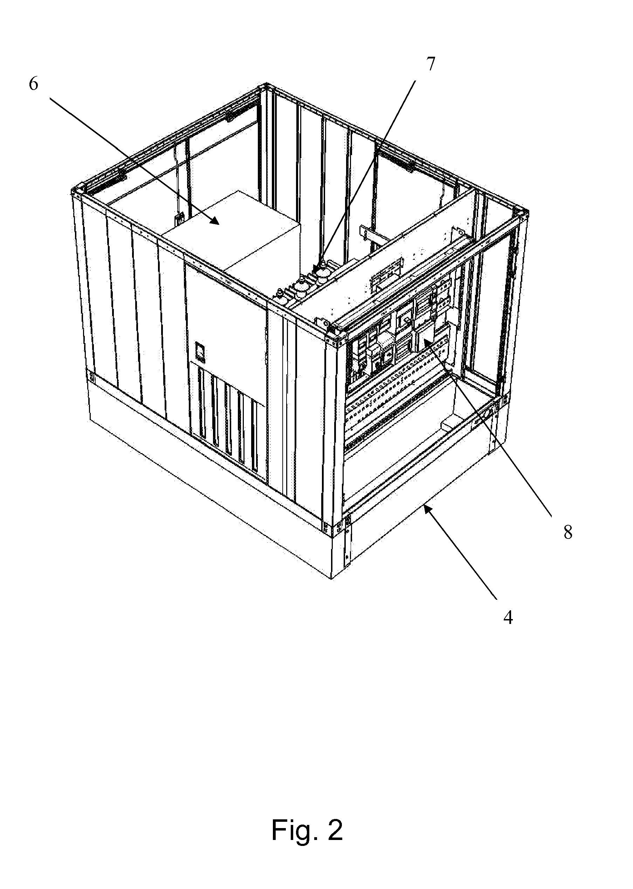

The term Compact Secondary Substation (CSS) is typically used for transformer stations in which the power from the main electricity net is transformed from medium voltage (MV), which is in the range 1-50 kV, to low voltage (LV), which is in the range of <1000 Volts. Typical CSS are produced with a concrete foundation and a concrete or metal housing on top of the foundation. Examples of typical prior art CSS's are shown in FIG. 1 and FIG. 2.

A prior art CSS is typically delivered as a complete building with a foundation plate on which the transformer, the MV electrics and the LV electrics are mounted already and covered by a housing. This entirely equipped building, when delivered, has to be connected to the MV cables and LV - typically coming up from the ground - which are inserted into the housing through trench like openings in both end of the housing. As the cables are stiff and difficult to handle, the connection to the electricity net is a tedious task.

It would be desirable to ease the installation phase, when mounting the MCCB on the low voltage switchboard and to establish electrical connection and mechanical stability in particular in connection with CSS's however also in other applications. In addition, it would also be desirable to provide a solution which, while improving the installation phase of the MCCB, will also allow easing the production of the various mechanical fastening devices for attaching the MCCB on the low voltage switchboard.

### OBJECT OF THE INVENTION

It is therefore the object of the invention to provide a solution which, while improving the installation phase of the MCCB, will also allow easing the production of the mechanical fastening devices for attaching the MCCB's on the low voltage switchboard.

### DESCRIPTION / SUMMARY OF THE INVENTION

This object is achieved with an adapter and a combination mentioned by way of introduction and being peculiar in that the adapter base has an opening, that aligned first ends of said connectors extend through said opening and are arranged at a front side of the adapter base in order to form connections to be placed in the incoming or outgoing terminals of the MCCB, that the second end of said connectors are provided with a clamp being arranged in predefined different positions at the rear side of the adapter base corresponding to the positions of the busbars on the low voltage switchboard and having a clamping part for gripping over a busbar to establish electrical connection and mechanical stability, that each clamp has a tightening means aligned with a hole in said adapter base to be operated from the front side of the adapter base through said hole.

The electric switchboard according to the invention comprising a set of busbars, a moulded case circuit breaker, **characterized in that** it comprises an adapter according to one or more of the preceding claims.

The adapter according to the invention is used in the combination according to the invention.

The present invention comprises an adapter base of a non-conductive material, preferably plastic. The adapter base is rigid and could be manufactured by moulding.

In this adapter base there will normally be three busbars which are mounted by means of screws, eventually connecting the MCCB with a DIN-based low voltage switchboard busbars by means of said clamps, which also constitute a part of the adapter.

The special clamps do not use the threads of the DIN-based low voltage switchboard busbars for connection, as described when mounting fuselists, but grip over the busbar profile with a clamping part. Electrical connectivity is established by the clamping part, which normally comprises two interacting counterparts being fastened by a through going bolt which might be tightened through the hole in the adapter base. Thereby an electrical connection and mechanical stability is established.

Between the clamping parts, a spring ensures the demounting of the parts. A cover, preferably transparent of a non-conductive material may be mounted for protection reasons.

The adapter is normally mounted on the DIN-based low voltage switchboard by means of the three special clamps, gripping over each of the three busbars. The bolts through the special clamps are tightened with a predefined torque, and the holes in the adapter base will be covered with plastic caps for electric shock protection, since the bolt will be conductive.

Seen from the front side, the MCCB is mounted onto the adapter after the adapter has been mounted on the switchboard. The front side of the adapter base will have the first ends of the connectors extending through the opening in the adapter base. The first connector ends are positioned to suit the incoming or outgoing terminals of a predefined MCCB, which is mounted to the adapter base by means of a number of predefined bolts.

The adapter base is equipped with insert nuts or similar to mount the bolts predefined by the MCCB type and model, and the incoming terminals of the MCCB are bolted to the connectors for the MCCB.

For all commercial MCCB's product series, an extensive program of applications is present.

A large number of different outgoing terminals are available, suitable for different types and sizes of cables or rigid conductors, and the adapter is developed for use of these standard applications, which includes coverings.

A standard terminal covering is also used to cover the three adapter connectors, connecting the MCCB. The mounting of these covers depends on the type and model; most often by a snapping function since they are made in plastic.

Due to the large number of MCCB's produced, a terminal cover is normally produced by injection moulding, or a comparable production method, and as such has a good fit and thereby convincing protection. The overall feeling of the present adapter is far better than the prior art, that most often has a handmade appearance.

Other standard applications for MCCB's are motor operation devices, auxiliary contacts, current transformers and others. For all these functionalities wiring is needed, which is done through a standard box for mounting of DIN-rail apparatus. This box is mounted by screws to the adapter base, and could comprise terminals for wirings, an Ampere meter, or other possible apparatus for mounting on DIN-rails. Wirings will normally come out of both sides of the MCCB, so an opening in the adapter base is made under the MCCB for leading the wires to one side of the adapter.

A cable duct can be mounted in either side or in both sides of the adapter, but the opening under the MCCB makes further connections of the wirings possible, making the overall design more compact than if two cable ducts were needed.

With this invention both the fuselist and the MCCB can be used on the same switchboard. This might have been seen before, but in much cruder versions. The invention surely improves the overall quality of the energy supply function, the personal safety during use of standard coverings at a comparably lower cost price.

It shall be noted that the energy flow could be reversed in the MCCB so it would be used as incoming MCCB securing the supply to the low voltage switchboard. The MCCB adapter is no exception to this; it could also be used for an incoming MCCB.

### SHORT DESCRIPTION OF THE DRAWINGS

The invention will be explained in more detail with reference to the accompanying schematic drawing, where
- FIG. 1: shows a perspective view of prior art Compact Secondary Substation CSS,
- FIG. 2: shows a perspective view of the interior of a prior art Compact Secondary Substation CSS,
- FIG. 3: shows the principle in a DIN-based low voltage switchboard,
- FIG. 4: shows an exploded perspective view of a fuselist for a DIN-based low voltage switchboard,
- FIG. 5: shows a perspective view of a typical example of a Moulded Case Circuit Breaker MCCB,
- FIG. 6: shows a perspective view of an MCCB adapter base for an MCCB adapter according to the present invention as seen from the rear side of the MCCB adapter,
- FIG. 7: shows a perspective view of a clamp comprised in the MCCB adapter accord- ing to the present invention,
- FIG. 8: shows a cross section of the MCCB adapter, where the clamp can be seen left and the MCCB adapter base right,
- FIG. 9: shows a perspective view of an MCCB adapter base for an MCCB adapter according to the present invention as seen from the front side of the MCCB adapter,
- FIG. 10: shows a perspective view of an MCCB adapter according to the present in- vention with MCCB terminal covers and used as outgoing breaker,
- FIG. 11: shows a perspective view of an MCCB adapter according to the present in- vention with a cable duct mounted on a side of the MCCB adapter base,
- FIG. 12: shows an exploded view of an MCCB adapter according to the present inven- tion, and
- FIG. 13: shows a perspective view corresponding to FIG. 10 of an MCCB adapter ac- cording to the present invention with MCCB terminal covers and used as in- coming breaker.

### DETAILED DESCRIPTION / PREFERRED EMBODIMENT

FIG. 1 and FIG. 2 illustrate a prior art CSS. In FIG. 1 a CSS 1 is illustrated with roof 5 and side walls 2 resting on a lower wall part 3 which covers the foundation 4. Typically, a CSS is delivered in one unit as illustrated in FIG. 2 showing the foundation 4 on which there are mounted an MV section 6 receiving electricity from the MV net, the transformer 7 and the LV installation 8 with its MCCB's and fuse systems.

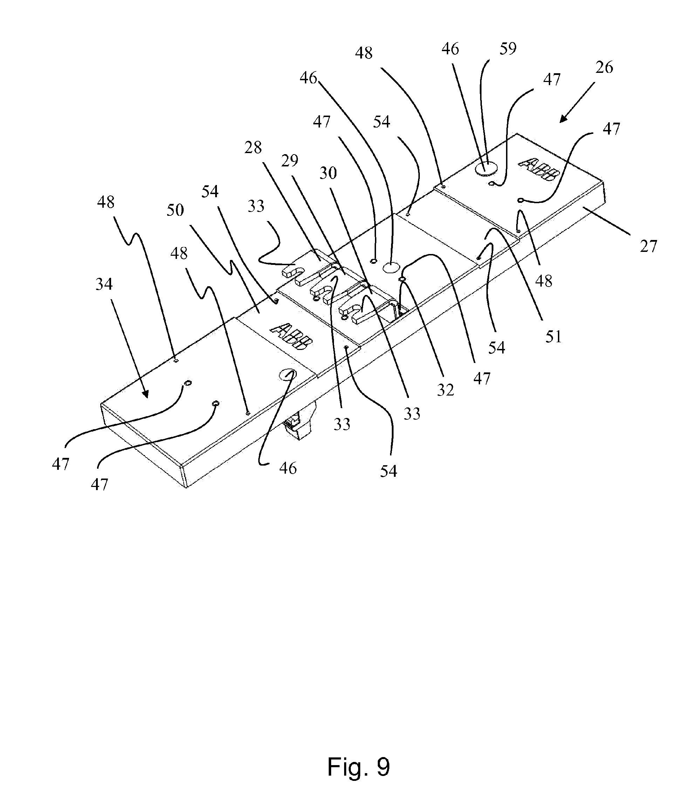

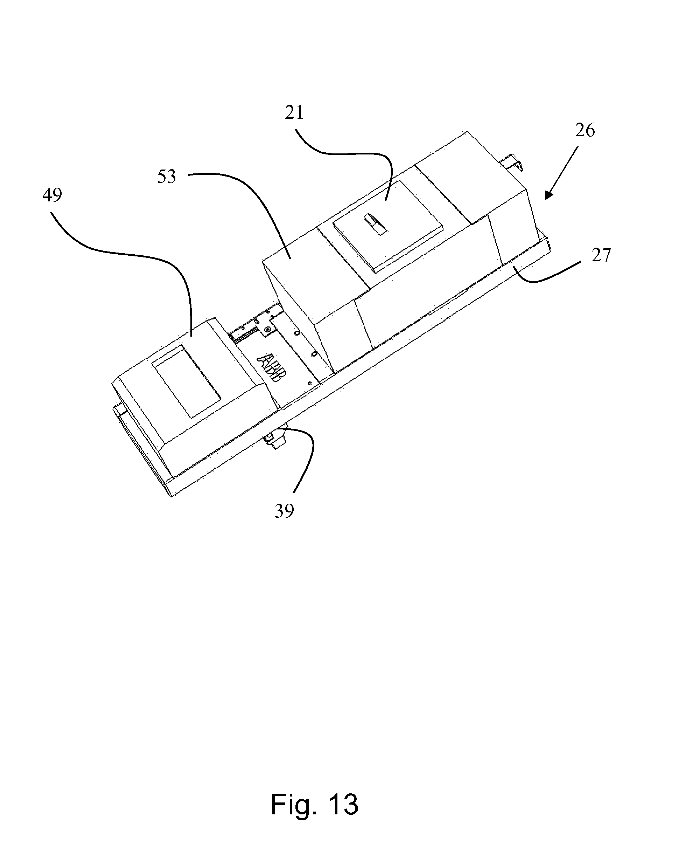

An adapter according to the invention will be used at the LV installation 8. The adapter will preferably be used in connection with outgoing terminals on outgoing MCCB's (see FIG. 9) from the LV installation; however it might also be arranged in connection with the incoming terminals in an incoming MCCB (see FIG. 13) to the LV installation 8.

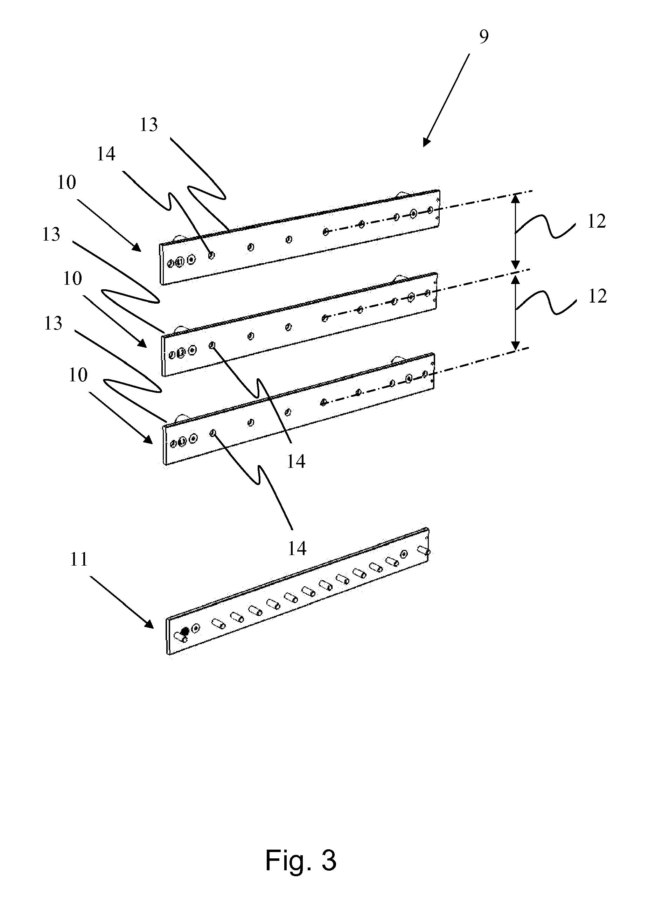

FIG. 3 shows the principle in a DIN-based low voltage switchboard 9. The three busbars 10 are placed above a neutral bar 11. The three busbars 10 are arranged with 185 mm distance 12. Surfaces 13 of the busbars are flush. M12 threads 14 are placed for each 100 mm lengthwise.

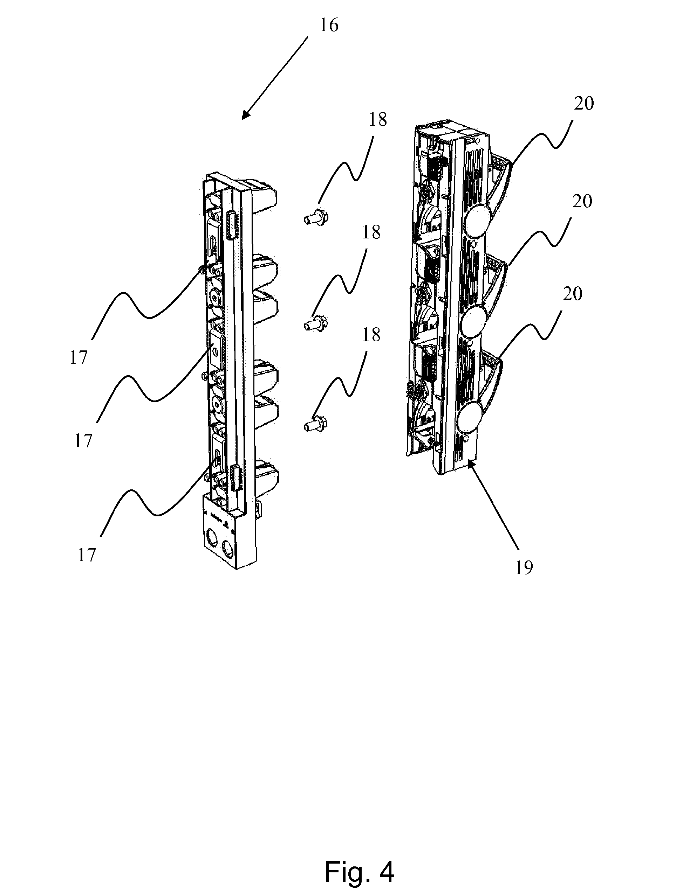

FIG. 4 shows an example of a prior art fuselist 15 for a DIN-based low voltage switchboard. To the left the fuse base 16, including/includes the copper terminals 17 on its rear side, which also is the mounting interface to the switchboard busbars 10 by means of bolts 18. A cover 19, in this case also with handles 20 for servicing the fuses, is placed on top of the fuse base 16 for protection.

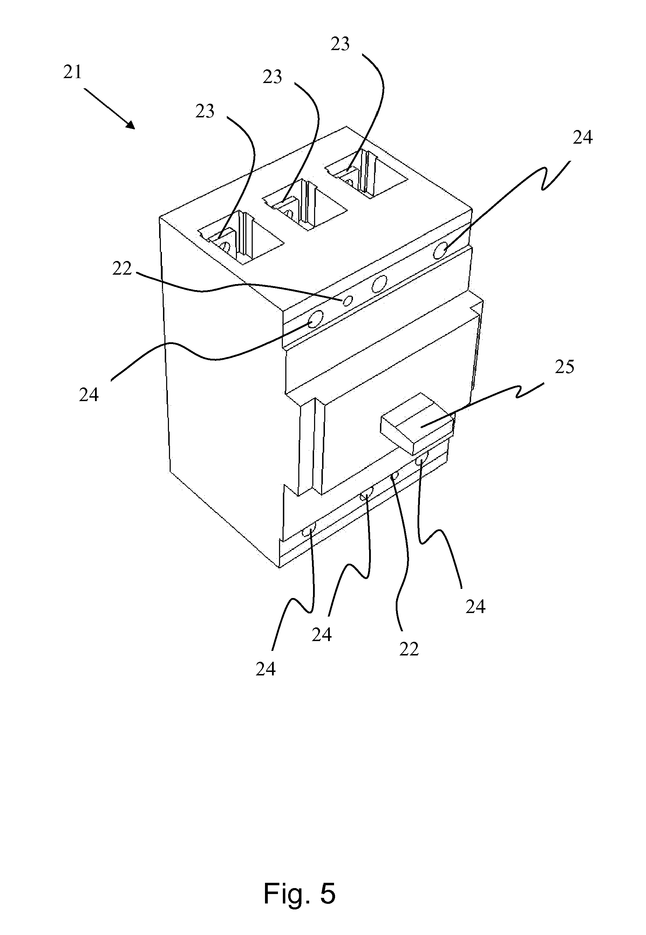

FIG. 5 shows a typical example of a Moulded Case Circuit Breaker, MCCB 21. The apparatus is mounted by means of bolts (not shown) through holes 22 seen on the front of the MCCB. Incoming copper terminals 23 are positioned on top of the MCCB 21. Outgoing terminals (not shown) which correspond to the incoming terminals 23 are placed in the MCCB bottom, opposite the incoming connectors 23. Holes 24 are arranged for connector bolts (not shown) to connect first connector ends with the incoming or the outgoing terminals. The MCCB 21 is switched on/off by a front handle 25.

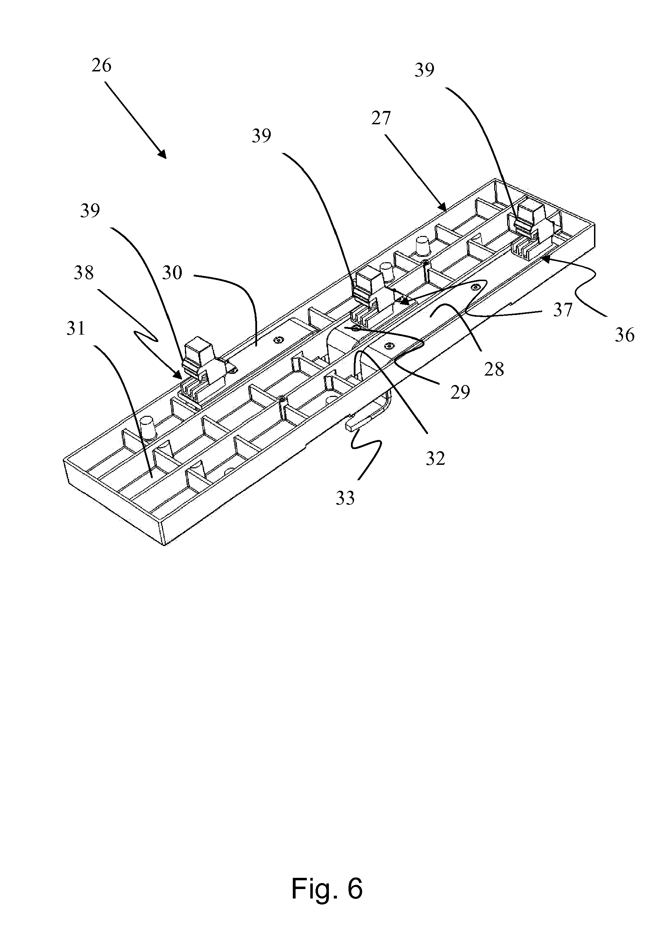

FIG. 6 shows the rear side of an adapter 26. The adapter has an adapter base 27. Three connectors 28, 29 and 30 are attached to the adapter base 27 at the rear side 31 thereof. The connectors 28, 29 and 30 connect the busbars and the terminals 23in the MCCB. Screws are used for the attachment of the connectors to the base plate.

As disclosed more clearly in FIG. 9 an opening 32 is arranged in the adapter base 27. This opening 32 allows that aligned first ends 33 of the connectors 28, 29 and 30 are arranged at the front side 34 of the adapter base 27. The first connector ends 33 form connector ends to be placed in the outgoing or incoming terminals 23 of the MCCB 21 when mounted on the adapter base 27.

It is seen from FIG. 6 that each of the connectors 28, 29 and 30 has a second end 36, 37 and 38 at the rear side 31 of the adapter base 27. Each of the second ends 36, 37 and 38 are provided with a clamp 39 arranged in predefined different positions corresponding to the positions of the three busbars 10. The clamps 39 grip over the busbars 10 and are used to establish electrical connection and mechanical fastening of the adapter 26 on the low voltage switchboard 9.

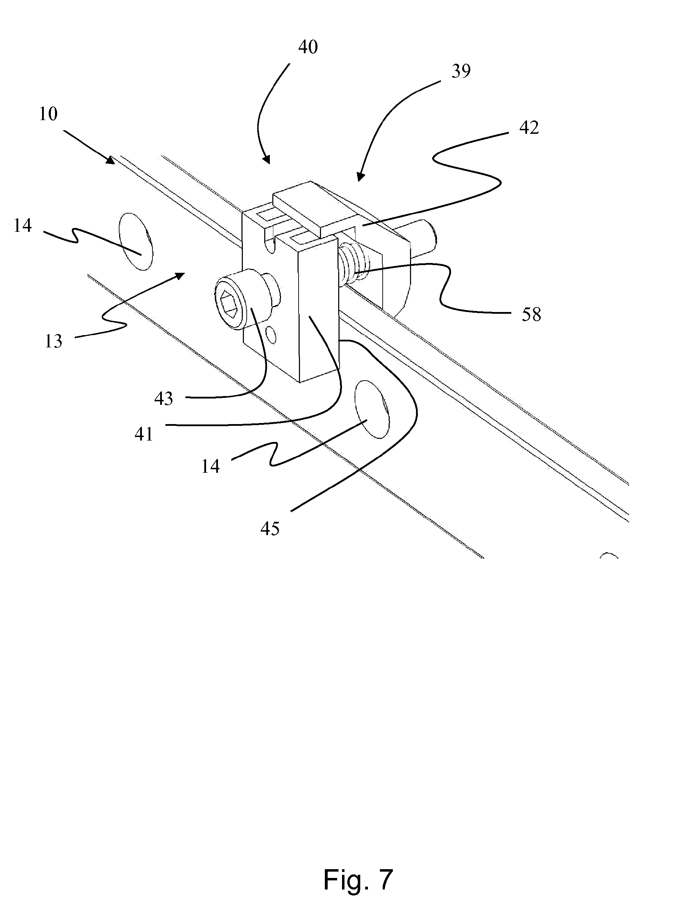

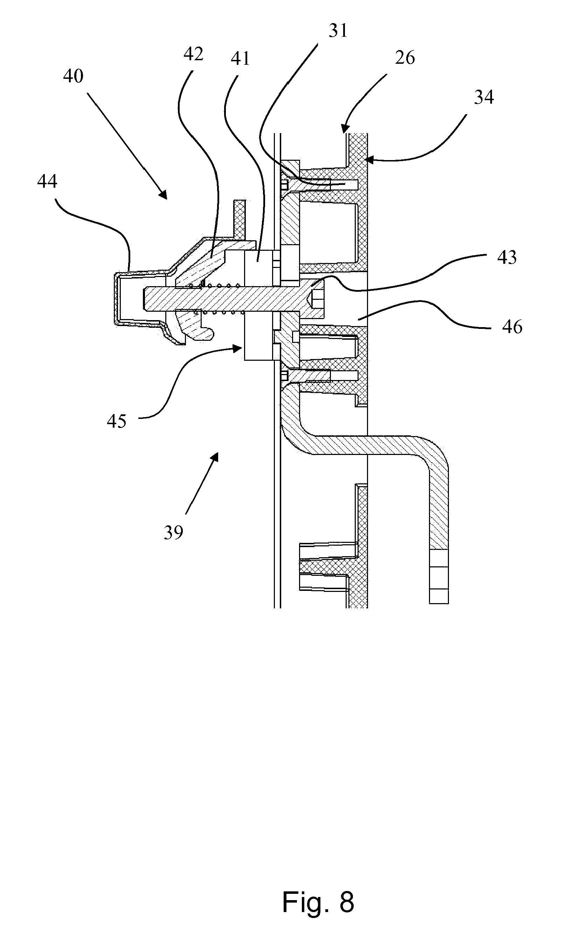

The clamps 39 are explained more detailed with reference to FIG. 7. The clamp 39 has a clamping part 40 which comprises a first clamping part 41 and a second clamping part 42 on each side of the busbar 10 in order to establish a gripping/clamping function when tightening a bolt 43. A spring 58 is provided between the first and second clamping part 41, 42 in order to ensure demounting of the two parts. The second clamping part 42 is covered by a cover 44 (see FIG. 8).

The DIN-based low voltage switchboard busbar 10 is illustrated with a flush surface 13 and with two of the threads 14 seen with 100 mm distance. The electrical connection and mechanical stability is ensured via the first clamping part 41, which is mounted with its flat back 45 against the flush surface 13 of the busbar 10.

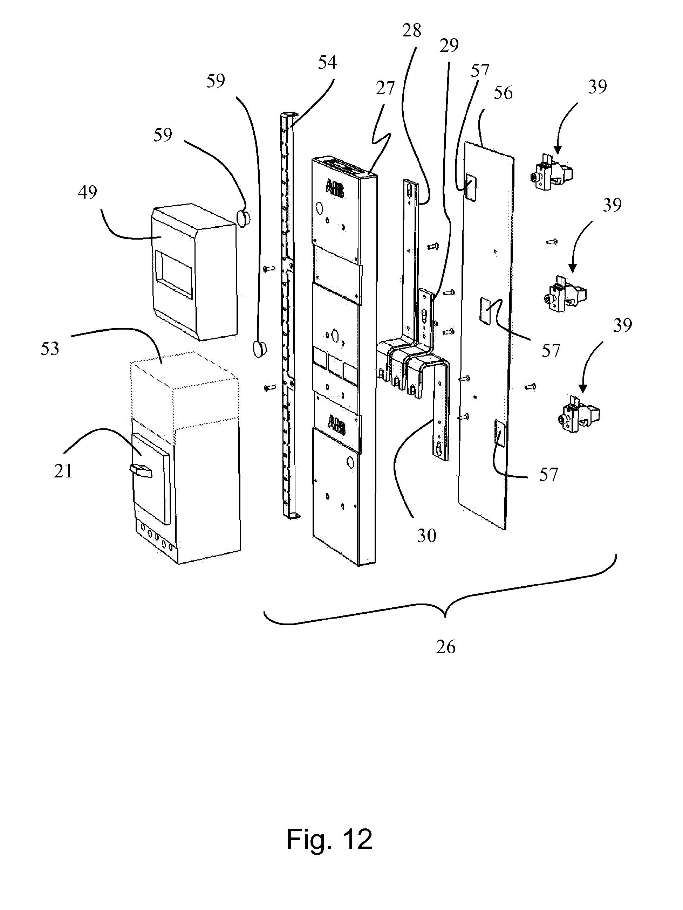

FIG. 8 is a cross section of the clamp and adapter illustrated in FIG. 6 and FIG. 7. The clamp 39 can be seen left of the adapter base 27. The bolt 43 is tightened from right through a hole 46 in the adapter base 27. Thereby it is possible to tighten the bolts 43 from the front side of the adapter base 27 by mounting the clamp 39 firstly to the connectors 28, 29 and 30 and then to the busbars 10 of the DIN-based low voltage switchboard. A plastic cap 59 (see FIG. 12) is eventually covering the bolt hole 46 in the adapter base 27.

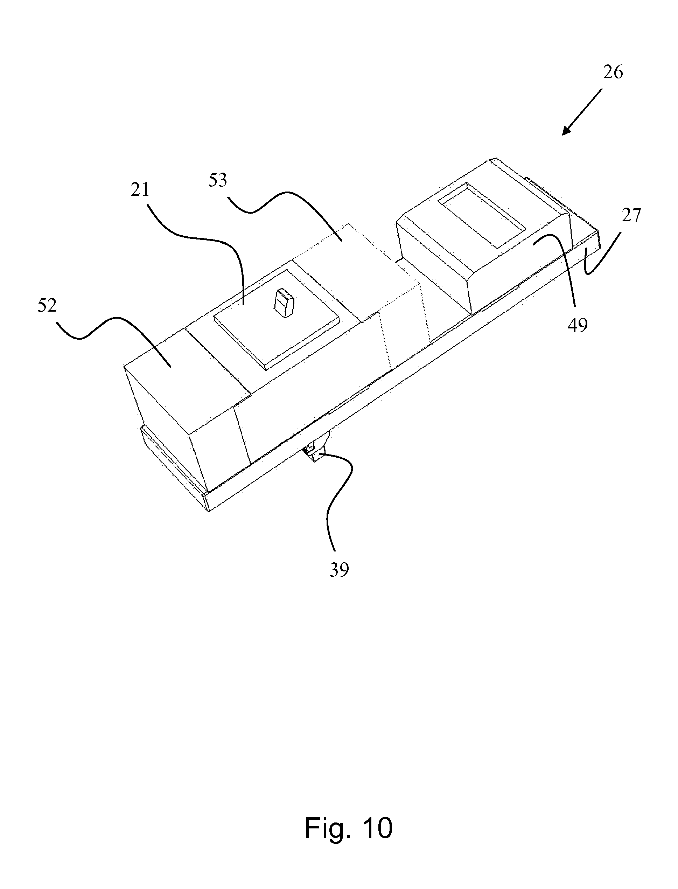

FIG. 9 shows the front side 34 of the adapter base 27. The three connectors/first ends 33 are seen in the middle of the adapter base 27. The three holes 46 for tightening the clamp bolts 43 (see FIG. 8) are the larger ones. They will be covered by either the plastic cap 59 or by the MCCB 21 itself for electrical protection. The smaller holes 47 are for mounting the MCCB 21 through its predefined bolts. On the upper and lower part of the adapter 26, holes 48 for a connection box 49 (see FIG. 10) are positioned.

The undercuts 50, 51 in the front side 34 below and above the connectors/first ends 33 are for mounting of a cable duct (not shown) respectively leading wires under the MCCB 21 and the connection box 49. Holes 54 for mounting said cable duct (not shown) are provided in the undercuts 50, 51.

FIG. 10 shows the adapter 26 seen with a standard terminal cover 52 over its outgoing terminals, while another standard cover 53 is placed on top of the first ends 33 of the connectors 28, 29 and 30 connecting the MCCB 21. A standard box 49 for DIN-rail apparatus is mounted on the upper end of the adapter 26 above the MCCB 21. The adapter 26 is configured as an outgoing breaker and has the first ends 33 arranged downwardly to be connected with incoming terminals 23 positioned in the top of the MCCB 21.

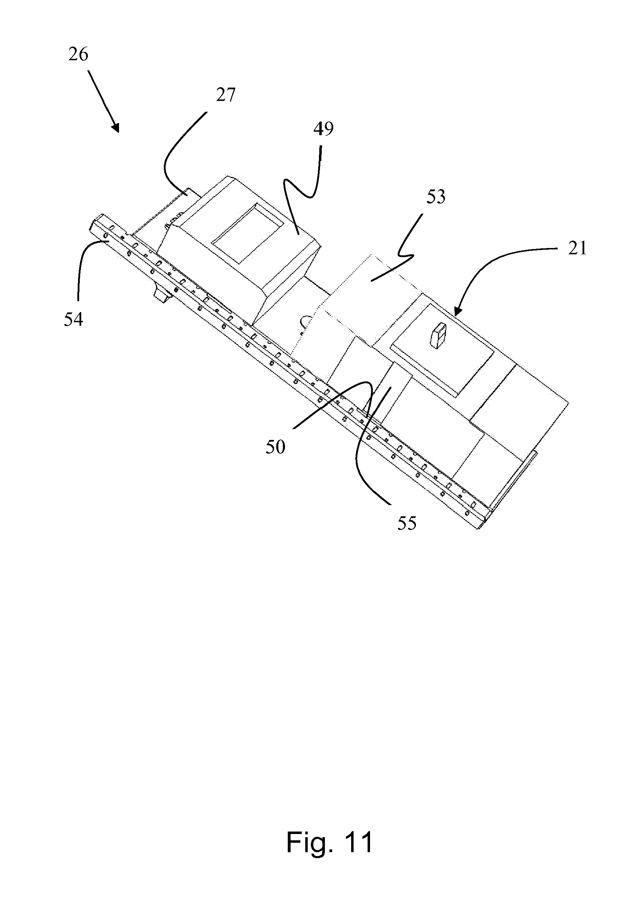

FIG. 11 shows that a cable duct 54 is mounted at one side of the adapter base 27. A cable duct 54 may be mounted on either side of the adapter base 27. In the side of the MCCB 21 a duct 55 is disclosed for wires which come out of the MCCB and for leading the wires (not shown) to the cable duct 54 arranged in the undercut 50.

FIG. 12 shows an exploded view of the adapter 26 illustrating all of the parts explained above and a covering plate 56 which may be arranged at the rear side of the adapter base 27. The plate 56 is provided with openings 57 for the attachment of the clamps 39 to the busbars 10. The covering plate 56 makes it possible to provide the adapter in a closed box-like form.

Only the few and technically simple standardised elements which are disclosed in FIG. 12 are necessary to manufacture the adapter 26.

FIG. 13 corresponds to FIG. 10, however here the adapter is seen configured as an incoming breaker. The adapter 26 is used as an incoming breaker and has the first ends 33' (not shown) arranged upwardly to be connected with outgoing terminals positioned in the bottom of the MCCB 21. In the embodiment shown in FIG. 13 the first ends 33' (not shown) are therefore pointing in an opposite direction compared to the first ends 33 shown in FIG. 9.

## Claims

1. Adapter for coupling with an MCCB which has incoming and outgoing terminals and is suitable to be placed on a low voltage switchboard comprising a set of busbars, said adapter comprises an adapter base to which connectors are mounted which connectors are suitable to be connected to said busbars and to said incoming or outgoing terminals of the MCCB, **characterised in that** the adapter base has an opening, that aligned first ends of said connectors extend through said opening and are arranged at a front side of the adapter base in order to form connections to be placed in the incoming or outgoing terminals of the MCCB, that the second end of said connectors are provided with a clamp being arranged in predefined different positions at the rear side of the adapter base corresponding to the positions of the busbars on the low voltage switchboard and having a clamping part for gripping over a busbar to establish electrical connection and mechanical stability, that each clamp has a tightening means aligned with a hole in said adapter base to be operated from the front side of the adapter base through said hole.

2. Adapter according to claim 1, **characterised in that** the adapter base is made of a non-conductive material.

3. Adapter according to claim 1 or 2, **characterised in that** the adapter base is rigid.

4. Adapter according to any preceding claim, **characterised in that** the clamping part comprises a first clamping part and a second clamping part arranged to be placed on each side of the busbar and being fastened to each other by a through going bolt.

5. Adapter according to claim 4, **characterised in that** a spring is mounted between the first and second clamping part.

6. Adapter according to any preceding claim, **characterised in that** the clamps are arranged in predefined positions with a mutual distance of 185 mm.

7. Adapter according to any preceding claim, **characterised in that** a cable duct is mounted at least at one side of the adapter base.

8. Adapter according to any preceding claim, **characterised in that** an opening in the adapter base is made under the MCCB for leading wires to one side of the adapter.

9. Adapter according to any preceding claim, wherein the adapter base has an opening, that aligned first ends of said connectors extend through said opening and are arranged at a front side of the adapter base in order to form connections to be placed in the incoming or outgoing terminals of the MCCB, that the second end of said connectors are provided with a clamp being arranged in predefined different positions at the rear side of the adapter base corresponding to the positions of the busbars on the low voltage switchboard and having a clamping part for gripping over a busbar to establish electrical connection and mechanical stability, that each clamp has a tightening means aligned with a hole in said adapter base to be operated from the front side of the adapter base through said hole.

10. An electric switchboard comprising a set of busbars, a moulded case circuit breaker, **characterized in that** it comprises an adapter according to one or more of the preceding claims.

11. Adapter in combination with an MCCB having incoming and outgoing terminals and which adapter is to be placed on a low voltage switchboard, said switchboard comprises a set of busbars and is used for distributing electrical energy to consumers, said adapter comprises an adapter base to which connectors are mounted which connectors are connected to said busbars and to said incoming or outgoing terminals of the MCCB, **characterised in that** the adapter base has an opening, that aligned first ends of said connectors extend through said opening and are arranged at a front side of the adapter base in order to form connections to be placed in the incoming or outgoing terminals of the MCCB, that the second end of said connectors are provided with a clamp being arranged in predefined different positions at the rear side of the adapter base corresponding to the positions of the busbars on the low voltage switchboard and having a clamping part for gripping over a busbar to establish electrical connection and mechanical stability, that each clamp has a tightening means aligned with a hole in said adapter base to be operated from the front side of the adapter base through said hole.

12. Use of an adapter according to any of the claims 1 - 9 in the combination according to claim 11.
